# FASCICULE DE BREVET EUROPEEN

(11) **EP 3 863 912 B1**
(45) Date de publication et mention de la délivrance du brevet: **21.02.2024**
(21) Numéro de dépôt: 19794592.6
(22) Date de dépôt: 13.09.2019
(51) Int. Cl.: B62D 25/20, B62D 21/15

(54) **STRUCTURE DE PLANCHER D'ASSISE RENFORCEE EN CAS DE CHOC POTEAU**
IM FALL EINES PFAHLSTOSSES VERSTÄRKTE SITZBODENSTRUKTUR
SEAT FLOOR STRUCTURE REINFORCED IN CASE OF POLE IMPACT

(30) Priorité: 09.10.2018 FR 1859367
(43) Date de publication de la demande: 18.08.2021
(73) Titulaire: Stellantis Auto SAS, 78300 Poissy (FR)
(72) Inventeur: GROSSET, Romain, 94230 CACHAN (FR)
(86) Numéro de dépôt international: PCT/FR2019/052130
(87) Numéro de publication internationale: WO 2020/074799

(56) Documents cités:
- WO-A1-2017/097427
- GB-A- 881 209
- US-A1- 2017 015 360

## Description

L'invention a trait au domaine des véhicules automobiles, plus particulièrement aux structures des véhicules automobiles.

Le document de brevet publié US 2010/0295335 A1 divulgue une structure de véhicule automobile comprenant un plancher d'assise et un pilier central ou montant central, de chaque côté du véhicule. La structure comprend un renfort, sous forme de poutre déformable de façon contrôlable, s'étendant transversalement sur le plancher d'assise. La poutre est fixée aux longerons de la structure du véhicule et aux montants milieu du véhicule automobile, derrière les sièges avant. Les rails fixes de fixation des sièges avant sont fixés sur la poutre. Le renfort encombre l'espace du véhicule à l'arrière des sièges et n'est pas optimal pour limiter le rapprochement des sièges avant en cas de choc poteau sur le véhicule.

Le document de brevet publié EP 1 671 872 A1 divulgue une structure de véhicule automobile comprenant un châssis avec deux longerons latéraux formant les côtés du châssis. La structure comprend un dispositif de renforcement fixé transversalement sous le châssis, à chacun des longerons. Le dispositif de renforcement comprend des moyens hydrauliques de force d'amortissement contre une déformation longitudinale dudit dispositif, empêchant ainsi une déformation transversale du châssis. Le dispositif de renforcement s'étend ainsi sous le plancher du véhicule automobile. Le renfort de cet état de l'art est complexe et encombrant.

Le document WO 2017/097427 A1 divulgue les caractéristiques du préambule de la revendication 1.

L'invention a pour objectif de pallier au moins un des inconvénients de l'état de la technique susmentionné. Plus particulièrement, l'invention a pour objectif de limiter le rapprochement des sièges du véhicule automobile en cas d'un choc poteau, afin de garantir la sécurité des passagers, tout en limitant l'encombrement dans le véhicule. L'invention a également pour objectif une solution simple, économique et robuste.

L'invention a pour objet une structure de véhicule automobile comprenant un plancher d'assise avec des zones de fixation de rails intérieur et extérieur de chacun de deux sièges avant ; et un renfort disposé transversalement sur le plancher d'assise ; remarquable en ce que le renfort est fixé directement au plancher d'assise et s'étend transversalement sur une portion avant des zones de fixation des rails intérieur et extérieur jusqu'à la zone de fixation de rail extérieur de chacun des deux sièges avant.

Le terme « sur » est en relation avec la face supérieure du plancher d'assise. Avantageusement, le renfort est rigide.

Avantageusement, le renfort a une épaisseur inférieure à 5 mm.

Selon l'invention, la structure comprend deux longerons intérieurs de bas de caisse, de part et d'autre du plancher d'assise, le renfort se terminant transversalement à distance de chacun des deux longerons intérieurs. Selon un mode avantageux de l'invention, le renfort présente des moyens de fixation directe aux rails des deux sièges avant.

Selon un mode avantageux de l'invention, les moyens de fixation comprennent au moins un orifice pour chaque rail extérieur.

Selon un mode avantageux de l'invention, le renfort comprend une portion centrale chevauchant un tunnel central du plancher du véhicule et deux bras latéraux de part et d'autre de la portion centrale, ladite portion centrale présentant une largeur moyenne supérieure ou égale à 150% de la largeur moyenne desdits bras.

La largeur est transversale à la direction principale du renfort.

Selon un mode avantageux de l'invention, le renfort est un embouti s'étendant suivant une direction principale transversale au véhicule, ledit embouti présentant une section transversale avec des extrémités formant des ailes fixées contre le plancher d'assise.

Selon un mode avantageux de l'invention, la section transversale de chacun des bras latéraux présente au moins deux bossages avec une portion intermédiaire fixée contre le plancher d'assise.

Selon un mode avantageux de l'invention, la section transversale de l'embouti présente une largeur maximale et une hauteur maximale, ladite largeur étant supérieure à quatre fois ladite hauteur.

L'invention a également pour objet un véhicule automobile comprenant une structure de véhicule automobile, des rails fixes de sièges avant fixés à ladite structure, remarquable en ce que la structure est selon l'invention, lesdits rails étant fixés sur les zones de fixation, chacun desdits rails étant fixé, sur une moitié avant dudit rail, au renfort.

Selon un mode avantageux de l'invention, la structure est selon l'un des modes de réalisation exposés ci-dessus, lesdits rails étant fixés sur les zones de fixation via des moyens de fixation s'étendant au travers du plancher et coopérant avec les moyens de fixation du renfort.

Les mesures de l'invention sont intéressantes en ce que le renfort est fixé directement au plancher d'assise et s'étend transversalement sur une portion avant des zones de fixation des rails intérieur et extérieur, jusqu'à la zone de fixation de rail extérieur de chacun des deux sièges avant. Le renfort empêche ainsi le déplacement latéral des sièges avant en cas de choc poteau sur la structure du véhicule automobile. Le renfort est solidaire des rails de fixation des sièges avant et forme ainsi une entretoise entre lesdits rails. L'invention évite ainsi que les passagers ne se cognent et se blessent mutuellement, en cas de choc poteau sur le véhicule automobile. L'invention peut être utilisée sur une large diversité de véhicules automobiles. Le renfort de l'invention n'encombre pas l'espace du véhicule automobile. L'invention est également intéressante en ce qu'elle est simple à mettre en oeuvre et peu coûteuse.

D'autres caractéristiques et avantages de la présente invention seront mieux compris à l'aide de la description et des dessins parmi lesquels :
- La figure 1 représente une vue de dessus d'une structure de véhicule automobile, conformément à l'invention ;
- La figure 2 représente la structure de la figure 1 sur laquelle sont représentés des sièges avant.

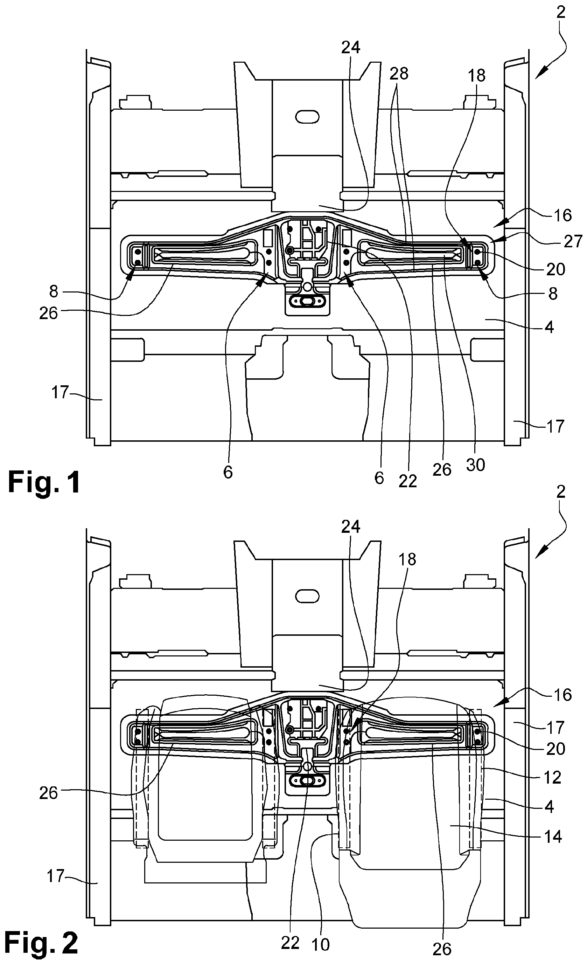

La figure 1 représente une structure de véhicule automobile vue de dessus et la figure 2 représente la structure de la figure 1 sur laquelle sont représentés des sièges avant de véhicule automobile. Les figures 1 et 2 seront décrites ensembles.

Les figures 1 et 2 représentent une structure 2 de véhicule automobile comprenant un plancher d'assise 4. Le plancher d'assise 4 comprend des zones de fixation 6, 8, (figure 1) respectivement de rails intérieur 10 et extérieur 12 de chacun de deux sièges avant 14 du véhicule automobile (figure 2). La structure 2 comprend un renfort 16 disposé transversalement sur le plancher d'assise 4. Le renfort 16 est fixé directement au plancher d'assise 4 et s'étend transversalement sur une portion avant des zones de fixation 6, 8 des rails intérieur et extérieur, jusqu'à la zone de fixation 8 de rail extérieur 12 de chacun des deux sièges avant 14. Les rails intérieur 10 et extérieur 12 sont respectivement fixés sur les zones de fixation 6 et 8. Le renfort 16 est avantageusement fixé au plancher par soudure.

La structure comprend deux longerons intérieurs 17 de bas de caisse, de part et d'autre du plancher d'assise 4. Le renfort 16 se termine transversalement à distance de chacun des deux longerons intérieurs 17.

Le renfort 16 est rigide et présente des moyens de fixation 18 directe aux rails 6, 8 des deux sièges avant 14. Les moyens de fixation 18 comprennent au moins un orifice 20 pour chaque rail extérieur 12. Chacun des rails fixes 10, 12 est fixé, sur une moitié avant du rail correspondant, au renfort 16.

Le renfort 16 comprend une portion centrale 22 chevauchant un tunnel central 24 du plancher 4 du véhicule et deux bras latéraux 26 de part et d'autre de la portion centrale 22. La portion centrale 22 présente une largeur moyenne supérieure ou égale à 150% de la largeur moyenne desdits bras 26.

Le renfort 16 est un embouti s'étendant suivant une direction principale transversale au véhicule. L'embouti présente une section transversale avec des extrémités 27 formant des ailes fixées contre le plancher d'assise 4. La section transversale de chacun des bras latéraux 26 présente au moins deux bossages 28 avec une portion intermédiaire 30 fixée contre le plancher d'assise 4 (Figure 1).

La section transversale de l'embouti 16 présente une largeur maximale et une hauteur maximale, ladite largeur étant supérieure à quatre fois ladite hauteur.

Les rails intérieur et extérieur 10, 12 des sièges avant 14 sont fixés sur les zones de fixation 6, 8 respectives via des moyens de fixation s'étendant au travers du plancher 4 et coopérant avec les moyens de fixation 18 du renfort 16. Les moyens de fixation s'étendant au travers du plancher d'assise 4 et coopérant avec les moyens de fixation 18 du renfort 16 peuvent comprendre des vis coopérant avec les orifices 20 des moyens de fixation 18 directe du renfort 16. Les moyens de fixation s'étendant au travers du plancher d'assise 4 ne sont pas représentés.

## Revendications

1. Structure (2) de véhicule automobile comprenant un plancher d'assise (4) avec des zones de fixation (6, 8) de rails intérieur et extérieur (10, 12) de chacun de deux sièges avant (14) ; et un renfort (16) disposé transversalement sur le plancher d'assise (4) ;
le renfort (16) étant fixé directement au plancher d'assise (4) et s'étendant transversalement sur une portion avant des zones de fixation des rails intérieur et extérieur (10, 12) jusqu'à la zone de fixation (8) de rail extérieur (12) de chacun des deux sièges avant (14), la structure (2) comprenant deux longerons intérieurs (17) de bas de caisse, de part et d'autre du plancher d'assise, **caractérisé en ce que** le renfort (16) se termine transversalement à distance de chacun des deux longerons intérieurs (17).

2. Structure (2) selon la revendication 1, **caractérisée en ce que** le renfort (16) présente des moyens de fixation (18) directe aux rails (10, 12) des deux sièges avant (14).

3. Structure (2) selon la revendication 2, **caractérisée en ce que** les moyens de fixation (18) comprennent au moins un orifice (20) pour chaque rail extérieur (12).

4. Structure (2) selon l'une des revendications 1 et 3, **caractérisée en ce que** le renfort (16) comprend une portion centrale (22) chevauchant un tunnel central (24) du plancher (4) du véhicule et deux bras latéraux (26) de part et d'autre de la portion centrale (22), ladite portion centrale (22) présentant une largeur moyenne supérieure ou égale à 150% de la largeur moyenne desdits bras (26).

5. Structure (2) selon la revendication 4, **caractérisée en ce que** le renfort (16) est un embouti s'étendant suivant une direction principale transversale au véhicule, ledit embouti (16) présentant une section transversale avec des extrémités (27) formant des ailes fixées contre le plancher d'assise (4).

6. Structure (2) selon la revendication 5, **caractérisée en ce que** la section transversale de chacun des bras latéraux (26) présente au moins deux bossages (28) avec une portion intermédiaire (30) fixée contre le plancher d'assise (4).

7. Structure (2) selon l'une des revendications 5 et 6, **caractérisée en ce que** la section transversale de l'embouti (16) présente une largeur maximale et une hauteur maximale, ladite largeur étant supérieure à quatre fois ladite hauteur.

8. Véhicule automobile comprenant une structure (2) de véhicule automobile, des rails fixes (10, 12) de sièges avant (14) fixés à ladite structure, **caractérisé en ce que** la structure (2) est selon l'une des revendications 1 à 7, lesdits rails (10, 12) étant fixés sur les zones de fixation (6, 8), chacun desdits rails étant fixé, sur une moitié avant dudit rail, au renfort (16).

9. Véhicule automobile selon la revendication 8, **caractérisé en ce que** la structure (2) est selon l'une des revendications 2 et 3, lesdits rails (10, 12) étant fixés sur les zones de fixation (6, 8) via des moyens de fixation s'étendant au travers du plancher et coopérant avec les moyens de fixation (18) du renfort (16).

## Patentansprüche

1. Kraftfahrzeugstruktur (2) mit einem Sitzboden (4) mit Befestigungsbereichen (6, 8) für innere und äußere Schienen (10, 12) jedes der beiden Vordersitze (14); und einer quer auf dem Sitzboden (4) angeordneten Verstärkung (16);
da die Verstärkung (16) direkt am Sitzboden (4) befestigt ist und sich quer über einen vorderen Abschnitt der Befestigungsbereiche der inneren und äußeren Schiene (10, 12) bis zum Befestigungsbereich (8) der äußeren Schiene (12) jedes der beiden vorderen Sitze (14) erstreckt, umfasst die Struktur (2) zwei innere Längsträger (17) des Unterbodens auf beiden Seiten des Sitzbodens, **dadurch gekennzeichnet, dass** die Verstärkung (16) quer im Abstand zu jedem der beiden inneren Längsträger (17) endet.

2. Struktur (2) nach Anspruch 1, **dadurch gekennzeichnet, dass** die Verstärkung (16) Mittel (18) zur direkten Befestigung an den Schienen (10, 12) der beiden Vordersitze (14) aufweist.

3. Struktur (2) nach Anspruch 2, **dadurch gekennzeichnet, dass** die Befestigungsmittel (18) mindestens eine Öffnung (20) für jede äußere Schiene (12) umfassen.

4. Struktur (2) nach einem der Ansprüche 1 und 3, **dadurch gekennzeichnet, dass** die Verstärkung (16) einen zentralen Abschnitt (22), der einen zentralen Tunnel (24) des Bodens (4) des Fahrzeugs überlappt, und zwei seitliche Arme (26) auf beiden Seiten des zentralen Abschnitts (22) umfasst, wobei der zentrale Abschnitt (22) eine mittlere Breite aufweist, die größer oder gleich 150% der mittleren Breite der Arme (26) ist.

5. Struktur (2) nach Anspruch 4, **dadurch gekennzeichnet, dass** die Verstärkung (16) eine Ausstülpung ist, die sich in einer Hauptrichtung quer zum Fahrzeug erstreckt, wobei die Ausstülpung (16) einen Querschnitt mit Enden (27) aufweist, die Flügel bilden, die an dem Sitzboden (4) befestigt sind.

6. Struktur (2) nach Anspruch 5, **dadurch gekennzeichnet, dass** der Querschnitt jedes der Seitenarme (26) mindestens zwei Vorsprünge (28) mit einem Zwischenabschnitt (30) aufweist, der an dem Sitzboden (4) befestigt ist.

7. Struktur (2) nach einem der Ansprüche 5 und 6, **dadurch gekennzeichnet, dass** der Querschnitt des Ansatzes (16) eine maximale Breite und eine maximale Höhe aufweist, wobei die Breite größer als das Vierfache der Höhe ist.

8. Kraftfahrzeug, umfassend eine Struktur (2) eines Kraftfahrzeugs, feste Schienen (10, 12) von Vordersitzen (14), die an der Struktur befestigt sind, **dadurch gekennzeichnet, dass** die Struktur (2) nach einem der Ansprüche 1 bis 7 ist, wobei die Schienen (10, 12) an den Befestigungsbereichen (6, 8) befestigt sind, wobei jede der Schienen an einer vorderen Hälfte der Schiene an der Verstärkung (16) befestigt ist.

9. Kraftfahrzeug nach Anspruch 8, **dadurch gekennzeichnet, dass** die Struktur (2) einem der Ansprüche 2 und 3 entspricht, wobei die Schienen (10, 12) an den Befestigungsbereichen (6, 8) über Befestigungsmittel befestigt sind, die sich durch den Boden erstrecken und mit den Befestigungsmitteln (18) der Verstärkung (16) zusammenwirken.

## Claims

1. Motor vehicle structure (2) comprising a seat floor (4) with inner and outer rail fastening areas (6, 8) (10, 12) of each of two front seats (14); and a reinforcement (16) arranged transversely on the seat floor (4);
the reinforcement (16) being fastened directly to the seat floor (4) and extending transversely over a front portion of the fastening zones of the inner and outer rails (10, 12) as far as the fastening zone (8) of the outer rail (12) of each of the two front seats (14), the structure (2) comprising two inner bodybase spars (17), on either side of the seat floor, **characterized in that** the reinforcement (16) terminates transversely at a distance from each of the two inner spars (17).

2. Structure (2) according to claim 1, **characterized in that** the reinforcement (16) has means (18) for direct attachment to the rails (10, 12) of the two front seats (14).

3. Structure (2) according to claim 2, **characterized in that** the fixing means (18) comprise at least one orifice (20) for each outer rail (12).

4. Structure (2) according to one of claims 1 and 3, **characterized in that** the reinforcement (16) comprises a central portion (22) overlapping a central tunnel (24) of the floor (4) of the vehicle and two lateral arms (26) on either side of the central portion (22), the said central portion (22) having an average width greater than or equal to 150% of the average width of the said arms (26).

5. Structure (2) according to claim 4, **characterized in that** the reinforcement (16) is a press-formed portion extending in a main direction transverse to the vehicle, the said press-formed portion (16) having a transverse cross-section with ends (27) forming wings fixed against the seat floor (4).

6. Structure (2) according to claim 5, **characterized in that** the cross-section of each of the lateral arms (26) has at least two bosses (28) with an intermediate portion (30) fixed against the sitting floor (4).

7. Structure (2) according to either of claims 5 and 6, **characterized in that** the cross-section of the stamped portion (16) has a maximum width and a maximum height, the said width being greater than four times the said height.

8. Motor vehicle comprising a motor vehicle structure (2), fixed rails (10, 12) of front seats (14) fixed to said structure, **characterized in that** the structure (2) is according to one of claims 1 to 7, said rails (10, 12) being fixed to the fixing zones (6, 8), each of said rails being fixed, on a front half of said rail, to the reinforcement (16).

9. Motor vehicle according to claim 8, **characterized in that** the structure (2) is according to one of claims 2 and 3, the said rails (10, 12) being fixed to the fixing areas (6, 8) via fixing means extending through the floor and cooperating with the fixing means (18) of the reinforcement (16).
